# EUROPEAN PATENT SPECIFICATION

(11) **EP 2 355 966 B1**
(45) Date of publication and mention of the grant of the patent: **04.05.2016**
(21) Application number: 09803780.7
(22) Date of filing: 11.11.2009
(51) Int. Cl.: B29B 13/02, B29C 71/02, B29C 47/88, B29C 47/00, H05B 3/00, B29C 35/08

(54) **METHOD AND DEVICE FOR HEATING POLYMER PRODUCTS**
VERFAHREN UND VORRICHTUNG ZUR ERHITZUNG VON POLYMERPRODUKTEN
PROCÉDÉ ET DISPOSITIF DE CHAUFFAGE DE PRODUITS POLYMÈRES

(30) Priority: 11.11.2008 FI 20086067
(43) Date of publication of application: 17.08.2011
(73) Proprietor: Uponor Innovation AB, 15561 Nastola (FI)
(72) Inventor: MYLLÄRI, Jari, FI-65320 Vaasa (FI)
(74) Representative: Seppo Laine Oy
(86) International application number: PCT/FI2009/050907
(87) International publication number: WO 2010/055206

(56) References cited:
- DE-C1- 4 402 295
- DE-U- 7 208 597
- JP-A- 2006 056 056
- US-A- 6 106 761
- US-A1- 2002 162 832

## Description

The present invention relates to a method according to the preamble of claim 1 for heating polymer products.

According to such a method infrared radiation is directed to an elongated polymer product from at least two infrared radiators.

The invention also relates to an apparatus according to the preamble of claim 11.

IR ovens are used for heating e.g. polymer products, especially pipes, whereby bridging occurs in the material through, e.g. radical mechanism. PE-X pipes used as, for example, drinking water and heating pipes, can be mentioned as typical examples. In current commercially available IR ovens the infrared radiators are typically integrally installed. In publications EP 0921921, DE 102006057781 disclose or at least mention some known IR ovens suitable for PEX pipes. JP 2006056056, on the other hand, discloses an arrangement for producing a thermoplastic polyurethane pipe.

There are significant problems related to prior art, the most important being that the heating is uneven, whereby peroxide residues remain in the material, and a homogenous cross-linking of polymer chains cannot be achieved. This technical problem has been noted specially during production of polyolefin pipes, such as PE-X pipes. DE 4402 295 C discloses a method according to the preamble of claim 1 and an apparatus according to the preamble of claim 11.

The aim of the invention is to eliminate the disadvantages relating to prior art and to produce a novel solution for heating polymer products, especially polyolefin products, with infrared radiation.

The invention is based on the idea of arranging the infrared radiator to move around the longitudinal axis of the polymer product along a circular arch, whereby each radiator moves in a continuous unidirectional movement during the heating of the polymer product.

In order to carry out the method a heating zone is arranged, the heating zone comprising a rotatable support structure. To accomplish heating, infrared radiators are used, arranged on inside of the support structure so that they are rotatably supported by the support structure, usually about the centre axis thereof, for evenly heating the polymer product.

More specifically, the method according to the invention is characterized by what is disclosed in the characterizing portion of claim 1.

The apparatus of the invention, on the other hand, is characterized by what is disclosed in the characterizing portion of claim 11.

Considerable advantages are achieved by means of the invention. Thus, the continuous circular movement enhances the distribution of heat inside the polymer material. As a result, the bridging is homogenous, which simultaneously also speeds up the process.

By using a plurality of IR radiators and by ensuring a sufficient rotation speed an even heating of the product is guaranteed. This situation can especially be achieved, if each radiator moves at least one revolution during the retention time of the polymer product within the heating zone, but a slower rate of the circular movement is also possible, if the number of radiators is very high.

Due to the even continuous movement along the circumference of a circle, conventional IR lamps with shock and vibration sensitive incandescent filaments can be used as radiators in the apparatus.

An IR oven produced according to the invention will be compact in size and the apparatus according to the invention can easily be attached to existing extrusion processes of pipes. In the following there are detailed descriptions of applications by means of which the oven can be made well-sealed and energy efficient.

According to one embodiment, the shape of the support structure is at least essentially cylindrical, such as a cylindrical support frame or drum. The infrared radiators can be spot-like or elongated, for example. Preferably, elongated infrared radiators are used, the length of which is at least approximately the same as that of the support cylinder and the centre axes of which are at least essentially parallel with the centre axis of the cylinder. This allows producing an especially even heating. The support structure can also be differently formed, i.e. its shape can deviate from a cylinder. In this case too, it is preferable to make sure that the infrared radiators are located at least approximately at the same distance from the outer surface of the pipe introduced into the oven during the circular movement.

The apparatus can also be designed such that the distance of the IR radiators from the centre axis of the support structure can be changed for heating as efficiently as possible pipes having various diameters or wall thicknesses, for example. On the other hand, the power of the IR radiators is also in most cases electronically adjustable, which also allows adjusting the heating power.

The supply of electric power to the infrared radiators, is carried out by means of a slip ring arrangement as described hereinafter.

Other advantages and details of the invention will be apparent from the following detailed description.
Figure 1 is a perspective view of an embodiment of an oven according to the invention with its base.
Figure 2 is a perspective view of the oven of figure 1 opened.
Figure 3 is a perspective view of the slip ring arrangement relating to the automation and supply of electric power of the oven.
Figure 4 is a perspective view of the fastening mechanism of the quartz glass of the oven.
Figures 5A and 5B are cross-sectional illustrations of the support means preventing sagging of the pipe and accomplishing stretching of the pipe in a combined extrusion and cross-linking process.

As has been stated above, polymer products, such as polymer pipes, are heated in a rotating infrared oven for e.g. bridging the polymer material. According to one embodiment the pipe is introduced, for example, directly from the extrusion to the heating zone, in which infrared radiation is directed thereto from at least two, most suitably from 3 to 20 elongated radiators, the radiators being arranged onto the inner shell surface of the support structure so that their longitudinal axes are at least essentially in parallel arrangement with the centre axis of the support structure. The polymer pipe is directed through the heating zone in a continuous movement, whereby it is, in particular, introduced into the heating zone parallel with the centre axis of the support structure. The infrared radiators attached to the support structure are caused to move around the longitudinal axis of the polymer product so that infrared radiation is directed thereon as evenly as possible during heating. Preferably this application is carried out by rotating the support structure of the radiators about its centre axis.

Each infrared radiator moves at least 1, most suitably 2 to 100, especially approximately 3 to 50 revolutions around the product to be heated while the product is in the heating zone.

About 10 to 1000 kJ, especially about 100 to 500 kJ of energy is directed to the polymer material per each kilogram (kg) of its mass. As a result the temperature of the pipe is increased by approximately 30 to 150 °C, in particular 50 to 100 °C.

As the temperature of the pipe rises in the heating zone to even 200 °C or more, it is preferable to carry out the heating in an inert atmosphere. Because of this, protective gas, such as nitrogen gas, is introduced into the heating zone during the heating. The protective gas is more preferably oxygen-free. The purpose of the protective gas is, among others, to remove the volatile components from the polymer product.

The invention is used in especially production of polyolefin pipes, especially polyethen pipes (PE-X/PE-Xa pipes). By means of the invention the heating is even and the amount of peroxide residues is lower than with known manufacturing methods of polyolefin pipes. Thus the polymer chains are homogenously cross-linked and the resultant product is homogenous in quality as well. Due to this, no weak points remain in the product, which is especially important for pipes subjected to internal (such as liquid pressure) pressure and/or external pressure (such as subterranean pressure).

Generally speaking, in the present heating apparatus there are typically from 3 to 20 infrared radiators that are most suitably arranged evenly spaced onto the inner surface of the support structure. It should be noted that the present apparatus is most typically used in a continuous process, i.e. the pieces introduced therein are many times longer than the heating zone or even endless, whereby each portion of the product has a certain retention time in the oven, depending on the feed rate and the length of the heating zone. The support structure is arranged to rotate at least 2, most suitably from 3 to 100, especially approximately 4 to 50 revolutions during this retention time. In practice this means that the rotation speed of the drum is usually approximately 1 to 100 revolutions per minute, especially about 2 to 50 revolutions per minute, most suitably approximately 5 to 30 revolutions per minute.

Typically a reflection surface is arranged between the infrared radiators and the shell surface. The reflectors allow a better use of diffuse radiation of the infrared radiators and thus enhance directing the radiation especially on the object to be heated.

The heating zone further comprises a casing made of heat-resistant and radiation-permeable material, such as quartz glass, typically a cylinder, through which the object to be heated can be transported. By means of such a casing it is possible to form an inert atmosphere in the vicinity of the polymer product by ensuring a sufficient gas closure in the ends thereof. Suitable seals have been arranged in the areas of the pipe nozzles and calibration apparatuses typically located in the ends.

The appended drawings illustrate the design of an apparatus solution according to one embodiment.

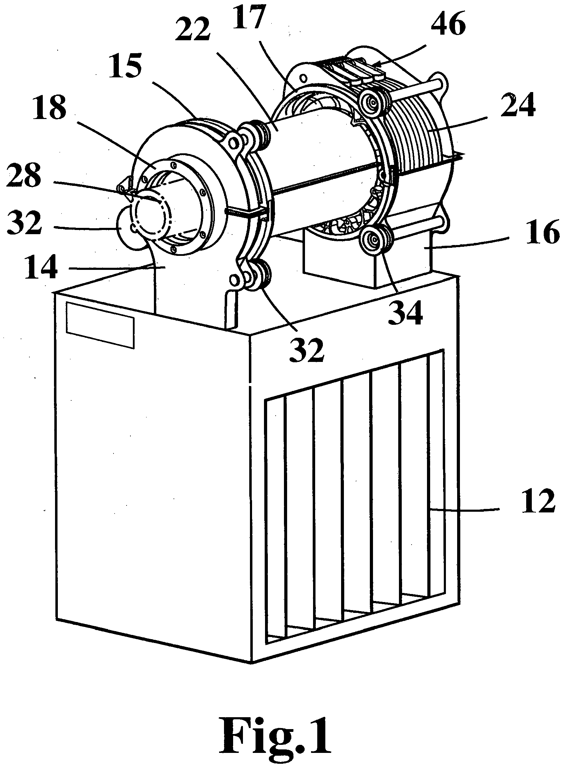

Figure 1 shows in more detail an apparatus according to one embodiment. In this example, the support cylinder 22 acts as the support structure, the cylinder forming the heating zone of the apparatus. In the case of figure 1 the support cylinder 22 is arranged over a base 10 supported by two supports 14, 16. The supports 14, 16 are most preferably located in the ends of the support cylinder 22. The pipe 28 to be heated is arranged to be introduced inside the support cylinder 22 from the direction of the first support 14 through the circumference 18 of the inlet opening and to exit the support cylinder 22 in the direction of the second support 16. Bearings are arranged between the support cylinder 22 and the supports 14, 16 making it possible to rotate the support cylinder 22 on the supports 14, 16 while the pipe 28 is inside the support cylinder 22.

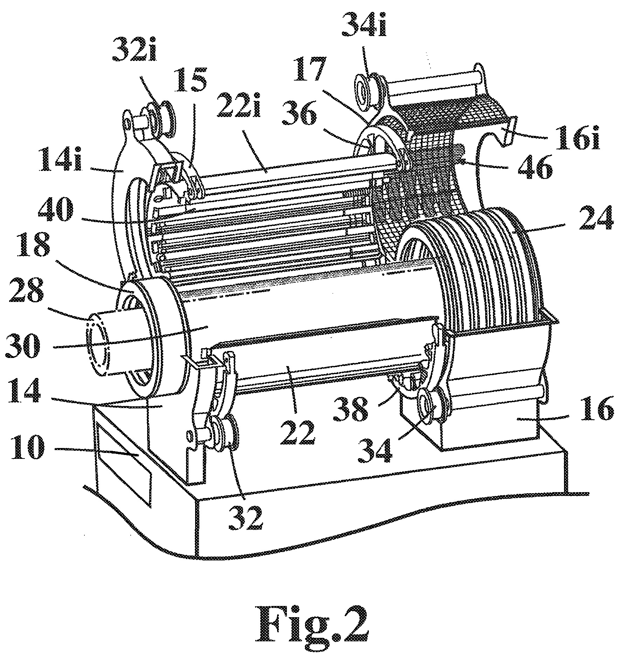

As the examples of figures 1 and 2 show, the rotation of the support cylinder 22 can be carried out so that both ends of the support cylinder 22 are provided with rotation rings 15, 17 arranged to be supported by carrier wheels 32, 34 provided in supports 14, 16. Preferably at least one carrier wheel acts as a friction wheel transmitting rotation torque and being functionally connected to the power source (not shown) causing the support cylinder 22 to rotate supported by the carrier wheels 32, 34 at the desired speed. The rotation rings 15, 17 are most suitably connected to the support cylinder 22 through thin brackets 36 so as to make the heat transfer from the support cylinder 22 to the rotation rings as small as possible. This also considerably increases the service of the bearings of the carrier wheels 32, 34. Most suitably there are at least two carrier wheels 32, 34 below the horizontal centre line of the support cylinder 22 in each support 14, 16. Additionally, in order to ensure stable rotation of the support cylinder 22, there most suitably is at least one carrier wheel 32', 34' above the horizontal centre line of the support cylinder 22 for each support 14, 16.

Most suitably the rotation speed of the support cylinder is 5 to 30 revolutions per minute, depending on the properties of the piece to be heated, the desired temperature and the feed rate of the polymer product.

Referring to figure 2, essentially elongated infrared radiators 40 are arranged inside the support cylinder 22 parallel with the centre axis thereof. Most preferably the number of radiators 40 is at least 2, but it can be as high as 10 to 20. To ensure as even a heating as possible, the radiators 40 are arranged symmetrically or in relation to the centre axis of the support cylinder 22 or otherwise at even intervals to the circumference of the cylinder. The radiators 40 are fastened to the inner surface of the support cylinder by means of their own fasteners that most preferably keep the radiators at a distance from the inner surface of the support cylinder 22. The electric connections for the radiators can be carried out by means of a method known as such. Due to ease of changing the lamps, the connection is most preferably carried out by means of a plug. Behind the radiators 40, on the inner surface of the support cylinder 22, there preferably is a reflective surface, such as a polished aluminum reflector, the purpose of which is to reduce scattered radiation and heating of the support cylinder 22.

The free distance of the support cylinder 22, i.e. the distance between supports 14 and 16, is preferably arranged to be essentially of similar length as the radiators 40 so as to avoid making the apparatus assembly unnecessarily long and thus increase the distance between the brackets needed by the pipe 28 too long. This decreases the risk of bending the pipe 28 during heating.

The power of the radiators is most preferably from 200 to 2000 W, such as 1200 W per radiator, and the radiation emitted by them can be short, medium or long wavelength IR radiation or any combination thereof, depending on e.g. the desired heating depth.

The actual oven core is inside the support cylinder 22, through which the pipe 28 can be transported. In the examples of the figures the oven core is limited inside the support cylinder 22 by means of a (quartz) glass cylinder 30. The glass cylinder 30 is arranged in a fixed position in relation to support 14, 16, i.e. it does not rotate with the support cylinder 22, or it can also be rotating.

A cooling zone has been arranged into the support 14 of the of the exit side of the pipe 28. Cooling gas, typically air, is arranged to travel between the quartz glass 30 and the support cylinder 22 so that it cools the IR radiators 40. The cooling air flow is caused by means of the cooling blower (not shown) located in the base/frame 10 of the apparatus. In the exemplary embodiment of the figure, there are slip rings 24 and brush holders 46 for the slip rings through which electricity can be directed to e.g. the IR radiators of the apparatus and through the openings therebetween the cooling air is arranged to exit. Simultaneously the cooling air prevents fouling of the slip rings and cools them. Preferably the cooling air is directed through a channel formed by the support/protective cover 16/16', i.e. most typically it is directed upwards from below in the region of the pipe. The cooling air can be filtered before it is directed to contact the IR radiators 40. For this purpose the apparatus can be provided with a pocket filter cartridge (not shown).

According to one embodiment the support structure 22 and optionally also the slip ring housing are arranged to be openable for making it possible or to facilitate changing the glass cylinder 30 and/or the infrared radiators 40. Therefore the support structure 22 comprises a first part, i.e. an openable cover part 22', into which a portion of the infrared radiators 40 are fastened. The rest of the radiators are fastened to the other part of the support structure 22, i.e. the lower part shown in the figure. Also the rotation rings 15, 17 or the supports 14, 16 of the support structure 22 can be correspondingly divided, most suitably two-part, as shown in figure 2. This also makes it possible to easily change the quartz glass 30. Most suitably the quartz glass 30 can be removed without tools so that its holder is lifted from the groove in the support 14, 16 or the like installation means slightly upwards and it is removed by pulling it from over the polymer product. Preferably both ends of the oven are provided with a similar glass holder.

According to one embodiment the slip rings 24 are fastened to the rotation ring 17 only by one side, such as through fasteners 38 arranged in the lower part of the rotation ring, which for its part makes it possible to open the support cylinder.

According to one embodiment the apparatus, most preferably the holder/holders 18 and/or 42 of the quartz glass comprises/comprise a gas channel for introducing inert gas to the intermediate space between the polymer product and the glass cylinder.

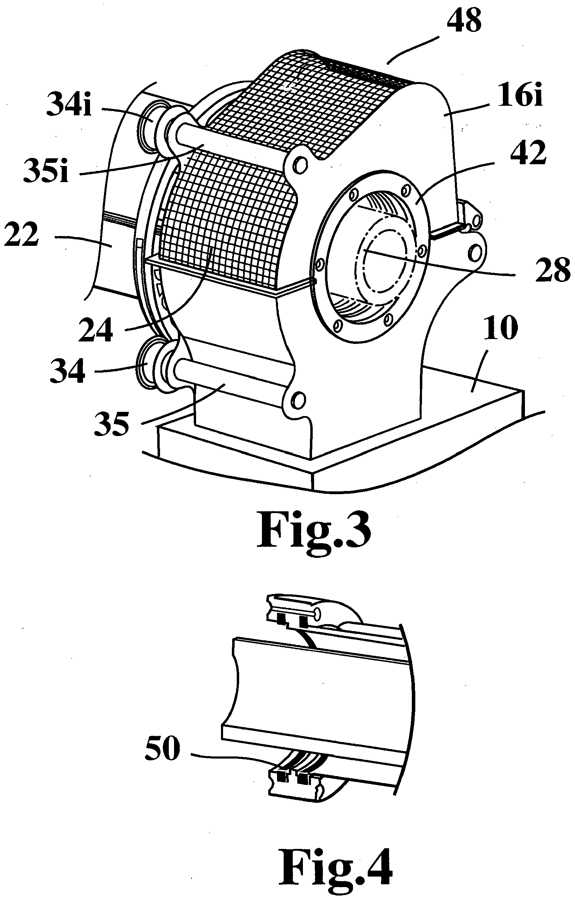

As is exemplified in figure 4, each glass holder 18, 42 can comprise at least one padding/seal ring 50 made of e.g. heat-resistant fabric, the padding or seal ring being compressed by a flange into a space provided for it. This arrangement ensures that the glass 30 is securely fastened to the holder without it breaking during the stresses of operation or service.

The oven can be sealed for creating an inert atmosphere by means of a glass/metal pipe to the extruder and in the other end to the cooling pool similarly to the quartz glass inside the oven. The oven units having different inside dimensions can be attached to each other by means of suitably sized spacers, for example by using glass holders having holes of suitable sizes.

According to one embodiment, especially for the production of pipes, the apparatus comprises at least one support means arranged inside the heating zone, such as a pin, that is preferably made of inert material absorbing only minor amounts of IR radiation or absorbing no IR at all, i.e. it does not disadvantageously heat in the heating zone. Such materials include, for example, various ceramics. The support means prevents sagging of the pipe and it can, when necessary cause biaxial stretching of the pipe for improving, among others, the strength properties of the pipe.

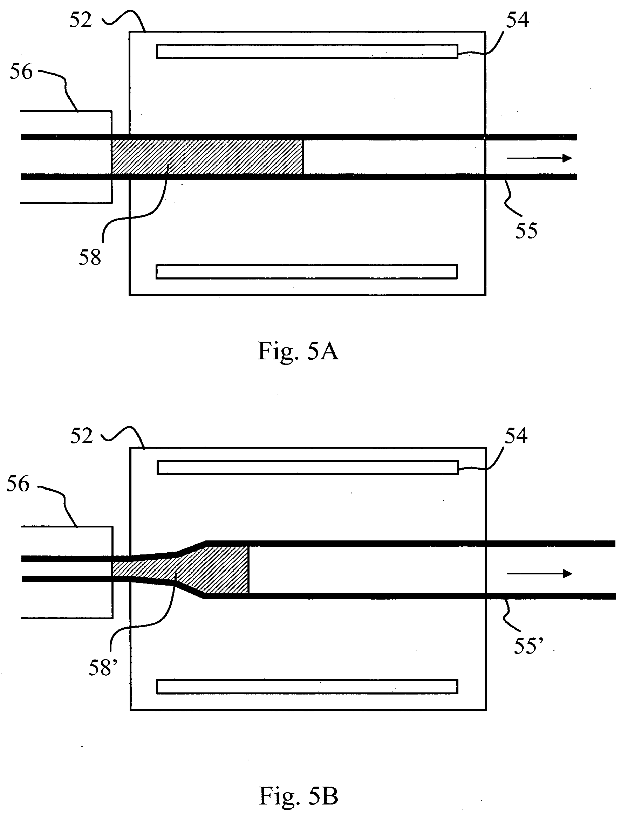

Figure 5A illustrates the operation principle of the support means. The support means comprises a pin 58, the cross-section of which essentially corresponds with the desired inside shape of the pipe 55. The other end of the pin 58 is connected to extruder 56 and the other end is free inside the pipe 55, preferably at a point in which the pipe 55 is at least partly cross-linked, whereby its strength has increased so as to be sufficient to prevent sagging of the pipe in the oven 52. Preferably the IR heating by means of the IR sources 54 is continued also subsequent to the ending of the pin 58, as is shown in the figure.

Figure 5B illustrates a pin 58' formed to provide biaxial stretching of the pipe 55'. In the first end of the oven 52, in which the cross-linking has already started, the cross-sectional area of the pin 58' increases in the feed direction of the pipe 55', whereby the force exerted on the pipe 55' causes an expansion of the pipe. The diameter of the pin 58' is at its largest, i.e. the pipe 55' receives its final form already before the cross-linking has ended. This is essential to avoid the shape of the product reverting to original when it is again heated (as in hot water applications). Thus the final cross-linking must take place only after the product is within its final dimensions, i.e. nominal dimensions. It has been noted that even though the wall thickness of the pipe 55' decreases during stretching, this solution allows as good or even improved strength properties when compared to non-stretched products. The chemical and physical basics of the stretching are described in more detail in US patent 6053214, describing a different method for causing stretching.

The present invention also relates to an apparatus comprising a number of apparatus units described above connected in series. According to one embodiment the apparatus is built as a module that can be connected before or after another corresponding module for increasing the retention time of the polymer product. The modules can be connected together either directly or by adapters between them. The adapters can also comprise support structures supporting and/or directing the polymer product between the modules.

The apparatus or an assembly formed by a number of apparatus modules can be connected directly downstream of the melt extrusion unit of the polymer product so that the product is taken to be bridged essentially directly after the melt extrusion. A separate cooling unit can further be connected to after the apparatus or apparatus assembly, such as a cooling pool, in which the temperature of the product is lowered to room temperature or near it. The apparatus is preferably installed so that the polymer product can be introduced therein essentially horizontally.

## Claims

1. A method for heating an elongated polymer product, wherein infrared radiation is directed on the polymer product (28) from at least two infrared radiators (40) located within a heating zone, wherein the infrared radiators (40) are arranged to move about the longitudinal axis of the polymer product (28) along a circular arch in a continuous parallel movement during the heating of the polymer product (28), and wherein electric potential is introduced to the infrared radiators (40) via one or more slip rings (24) arranged to be rotated with the infrared radiators during the rotation of the infrared radiators (40), wherein the number of slip rings (24) is at least two **characterized in that** they are arranged at a distance from each other, whereby a gas flow is directed between them during heating for cooling the infrared radiators (40).

2. A method according to claim 1, **characterized in that**
- the polymer product (28) is introduced into the heating zone wherein it is subjected to infrared radiation from at least two elongated infrared radiators (40) arranged onto an inner surface of a support structure (22) so that their longitudinal axes are arranged at least essentially parallel to the centre axis of the support structure (22),
- the polymer product (28) is introduced into the heating zone parallel with the centre axis of the support structure (22),
- the infrared radiators (40) are caused to move about the longitudinal axis of the polymer product so that the polymer product (28) is subjected to infrared radiation as evenly as possible during the heating, and
the support structure (22) of the infrared radiators (40) is rotated about its centre axis for heating the polymer product (28).

3. A method according to any of the previous claims, **characterized in that** inert gas is introduced into the heating zone during heating.

4. A method according to any of the previous claims, **characterized in that** the polymer product (28) is caused to move through the heating zone in a continuous, linear movement during heating.

5. A method according to any the preceding claims, **characterized in that** the polymer product (28) is a polyolefin pipe, especially a polyethene pipe, that is heated for cross-linking the polyolefin material and that is received directly from an extrusion nozzle of an extruder tool (56).

6. A method according claim 5, **characterized in that** a support means (58, 58') is arranged, extending inside the polymer pipe (28, 55) from the melt extrusion unit to the heating zone, arranged to prevent sagging of the pipe (28, 55) during heating.

7. A method according to claim 6, **characterized in that** the cross-sectional area of the support means (58') increases in the feed direction of the pipe (28, 55) for achieving biaxial stretching of the pipe (28, 55) during the heating.

8. A method according to any of the previous claims, **characterized in that** the temperature of the polymer product (28) is increased by approximately 30 - 150 °C, especially approximately 50 - 100 °C.

9. A method according to any of the previous claims, **characterized in that** approximately 10 - 1000 kJ, especially 100 - 500 kJ of energy is directed to the polymer material per mass (kg).

10. A method according to any of the previous claims, **characterized in that** each infrared radiator (40) moves at least one revolution, most suitably 2 - 100 revolutions, especially 3 - 50 revolutions around the product to be heated during the time the product (28) is in the heating zone.

11. An apparatus for heating a polymer product (28) with infrared radiation, the apparatus comprising a heating zone provided with at least two infrared radiators (40) by means of which the polymer product (28) introduced into the heating zone can be heated,
- wherein the heating zone comprises a support structure (22) to which the infrared radiators are attached (40),
- the infrared radiators (40) are arranged on the inside surface of the support structure (22), and
- the infrared radiators (40) are rotatably supported by the support structure (22), about the centre axis thereof, by means of a continuous parallel movement during the heating of the polymer product (28) for evenly heating the polymer product,
- one or more slip rings (24) arranged to be rotatable with the support structure (22) and means for directing electric potential via the slip rings (22) to the infrared radiators (40) during rotation, wherein
the number of the slip rings (24) is at least two **characterized in that** they are arranged at a distance from each other so that a gas flow can be directed between them during operation of the oven for cooling the IR radiators.

12. An apparatus according to claim 11, **characterized in that** the infrared radiators (40) are evenly spaced on the inner surface of the support structure (22), elongated in shape and their axis is essentially parallel with the centre axis of the support structure (22).

13. An apparatus according to claim 11 or 12, **characterized in that** a reflective surface is arranged between the infrared radiators (40) and the inner surface of the support structure (22).

14. An apparatus according to any of claims 11 - 13, **characterized in that** the number of infrared radiators (40) is 2 - 20.

15. An apparatus according to any of claims 11 - 14, **characterized in that** the support structure (22) is cylindrical in shape and rotatably supported by carrier wheels (32, 34) by means of rotation rings (15, 17) arranged on the outside surface of the support structure (22), onto which rings (15, 17) the carrier wheels (32, 34) are supported.

16. An apparatus according to any of claims 11 - 15, **characterized in that** the support structure (22) is arranged to rotate at least 1, most suitably 2 - 100, especially 3 - 50 revolutions about the product (28) to be heated while the product (28) is in the heating zone.

17. An apparatus according to any of claims 11 - 16, **characterized in that** the heating zone further comprises a cylinder 30 made of heat-resistant and radiation-permeable material, such as quartz glass or boron glass, through which the polymer product (28) to be heated is transported and outside which said infrared radiators (40) are arranged.

18. An apparatus according to any of claims 11 - 17, **characterized in that** it comprises a nozzle arranged in the support structure (22) for introducing inert gas to the heating zone.

19. The use of an apparatus according to any of claims 11 - 18 connected downstream of the melt extrusion unit (56) of a polymer pipe (28, 55) for cross-linking the polymer pipes produced by the melt extrusion unit.

20. The use according to claim 19, **characterized in that** the said melt extrusion unit (56) of a polymer pipe (28, 55) is a melt extrusion unit for polyolefin pipes, especially polyethene pipes, the unit being connected to a source of the polyolefin.

## Patentansprüche

1. Ein Verfahren zur Erhitzung eines länglichen Polymerprodukts, wobei eine Infrarotstrahlung auf das Polymerprodukt (28) gerichtet wird, und zwar aus mindestens zwei, in einem Erhitzungsbereich angeordneten Infrarot-Strahlern (40), wobei die Infrarot-Strahler (40) angeordnet sind, um sich über die Längsachse des Polymerprodukts (28) längs eines Rundbogens in einer kontinuierlichen parallelen Bewegung während der Erhitzung des Polymerprodukts (28) bewegen, und wobei den Infrarot-Strahlern (40) elektrisches Potenzial über einen oder mehrere Schleifringe (24) zugeführt wird, die angeordnet sind, um sich mit den Infrarot-Strahlern während der Drehung der Infrarot-Strahler (40) zu drehen, wobei die Anzahl Schleifringe (24) mindestens zwei beträgt, **dadurch gekennzeichnet, dass** sie in einer Entfernung voneinander angeordnet sind, wobei während der Erhitzung ein Gasstrom zwischen ihnen gerichtet wird, um die Infrarot-Strahler (40) zu kühlen.

2. Ein Verfahren gemäß Anspruch 1, **dadurch gekennzeichnet, dass**
- das Polymerprodukt (28) in den Erhitzungsbereich eingeführt wird, wobei es einer Infrarotstrahlung aus mindestens zwei, an einer Innenfläche einer Trägerstruktur (22) angeordneten, länglichen Infrarotstrahlern (40) unterzogen wird, so dass deren Längsachsen zumindest wesentlich parallel zur zentralen Achse der Trägerstruktur (22) angeordnet sind,
- das Polymerprodukt (28) in den Erhitzungsbereich eingeführt wird, und zwar parallel zur zentralen Achse der Trägerstruktur (22),
- die Infrarotstrahler (40) über die Längsachse des Polymerprodukts bewegt werden, derart, dass das Polymerprodukt (28) während der Erhitzung einer so gleichmäßigen Infrarotstrahlung wie möglich unterzogen wird, und
sich die Trägerstruktur (22) der Infrarotstrahler (40) um ihre zentrale Achse dreht, um das Polymerprodukt (28) zu erhitzen.

3. Ein Verfahren gemäß einem der vorstehenden Ansprüche, **dadurch gekennzeichnet, dass** während der Erhitzung Inertgas in den Erhitzungsbereich eingeführt wird.

4. Ein Verfahren gemäß einem der vorstehenden Ansprüche, **dadurch gekennzeichnet, dass** das Polymerprodukt (28) in einer kontinuierlichen linearen Bewegung durch den Erhitzungsbereich hindurch bewegt wird.

5. Ein Verfahren gemäß einem der vorstehenden Ansprüche, **dadurch gekennzeichnet, dass** das Polymerprodukt (28) ein Polyolefin-Rohr, insbesondere ein Polyethylen-Rohr ist, welches zur Vernetzung des Polyolefin-Werkstoffs erhitzt wird, welcher direkt aus einer Extrusionsdüse eines Extrusionswerkzeugs (56) erhalten wird.

6. Ein Verfahren gemäß Anspruch 5, **dadurch gekennzeichnet, dass** Trägermittel (58, 58') angeordnet sind, die sich im Innern des Polymer-Rohres (28, 55) von der Schmelz-Extrusionseinheit in den Erhitzungsbereich erstrecken, und angeordnet sind, um ein Durchhängen des Rohrs (28, 55) während dem Erhitzen zu verhindern.

7. Ein Verfahren gemäß Anspruch 6, **dadurch gekennzeichnet, dass** sich der Querschnittbereich der Trägermittel (58') in die Einspeiserichtung des Rohrs (28, 55) vergrößert, um während der Erhitzung eine biaxiale Dehnung des Rohrs (28, 55) zu erzielen.

8. Ein Verfahren gemäß einem der vorstehenden Ansprüche, **dadurch gekennzeichnet, dass** die Temperatur des Polymerprodukts (28) um circa 30-150 °C, insbesondere um 50-100 °C erhöht wird.

9. Ein Verfahren gemäß einem der vorstehenden Ansprüche, **dadurch gekennzeichnet, dass** circa 10-1.000 kJ Energie, insbesondere 100-500 kJ Energie pro kg Material auf den Polymer-Werkstoff gerichtet wird.

10. Ein Verfahren gemäß einem der vorstehenden Ansprüche, **dadurch gekennzeichnet, dass** jeder Infrarotstrahler (40) um das zu erhitzende Produkt herum, während dem Zeitraum, in dem sich das Produkt (28) im Erhitzungsbereich befindet, mindestens eine Umdrehung, geeigneterweise 2 - 100 Umdrehungen, und insbesondere 3 - 50 Umdrehungen, durchläuft.

11. Ein Gerät zur Erhitzung eines Polymerprodukts (28) mittels Infrarotstrahlung, wobei das Gerät einen Erhitzungsbereich mit mindestens zwei Infrarot-Strahlern (40) umfasst, durch welche das in den Erhitzungsbereich eingeführte Polymerprodukt (28) erhitzt werden kann,
- wobei der Erhitzungsbereich eine Trägerstruktur (22) umfasst, auf der die Infrarotstrahler befestigt sind (40),
- und die Infrarotstrahler (40) an der Innenseite der Trägerstruktur (22) angeordnet sind, und
- die Infrarotstrahler (40) von der Trägerstruktur (22) drehbar über ihre zentrale Achse getragen werden und über eine kontinuierliche parallele Bewegung während der Erhitzung des Polymerprodukts (28) für eine gleichmäßige Erhitzung des Polymerprodukts sorgen,
- wo ein oder mehrere Schleifringe (24) drehbar angeordnet sind, um mit der Trägerstruktur (22) zu drehen, sowie Mittel zur Beaufschlagung eines elektrischen Potenzials über die Schleifringe (22) an die Infrarotstrahler (40) während der Drehung aufweisen, wobei
die Anzahl Schleifringe (24) mindestens zwei beträgt, **dadurch gekennzeichnet, dass** sie in einer Entfernung voneinander angeordnet sind, wobei während der Erhitzung ein Gasstrom zwischen ihnen gerichtet wird, um die Infrarot-Strahler zu kühlen.

12. Ein Gerät gemäß Anspruch 11, **dadurch gekennzeichnet, dass** die Infrarotstrahler (40) in einem gleichmäßigen Abstand an der Innenseite der Trägerstruktur (22) angeordnet sind, von länglicher Form sind und dass deren Achse im Wesentlichen parallel zur zentralen Achse der Trägerstruktur (22) angeordnet ist.

13. Ein Gerät gemäß Anspruch 11 oder 12, **dadurch gekennzeichnet, dass** eine reflektierende Fläche zwischen den Infrarotstrahlern (40) und der Innenfläche der Trägerstruktur (22) angeordnet ist.

14. Ein Gerät gemäß einem der vorstehenden Ansprüche 11 - 13, **dadurch gekennzeichnet, dass** die Anzahl der Infrarotstrahler (40) von 2 bis 20 Stück beträgt.

15. Ein Gerät gemäß einem der vorstehenden Ansprüche 11 - 14, **dadurch gekennzeichnet, dass** die Trägerstruktur (22) zylindrisch ist, und drehbar von Mitnehmerrädern (32, 34) mittels Rotationsringen (15, 17) getragen wird, die auf der Außenseite der Trägerstruktur (22) angeordnet sind, wobei die Mitnehmerräder (32, 34) von den Ringen (15, 17) getragen werden.

16. Ein Gerät gemäß einem der vorstehenden Ansprüche 11 - 15, **dadurch gekennzeichnet, dass** die Trägerstruktur (22) so angeordnet ist, um sich um das zu erhitzende Produkt (28) herum, während dem Zeitraum, in dem sich das Produkt (28) im Erhitzungsbereich befindet, mindestens einmal, geeigneterweise 2 - 100 mal und insbesondere 3 - 50 mal zu drehen.

17. Ein Gerät gemäß einem der vorstehenden Ansprüche 11 - 16, **dadurch gekennzeichnet, dass** der Erhitzungsbereich darüber hinaus einen Zylinder (30) aus einem hitzebeständigen, strahlungsdurchlässigen Werkstoff umfasst, wie beispielsweise Quartzglas oder Borglas, durch welchen das zu erhitzende Polymerprodukt (28) transportiert wird, und in wessen Äußeren die Infrarotstrahler (40) angeordnet sind.

18. Ein Gerät gemäß einem der vorstehenden Ansprüche 11 - 17, **dadurch gekennzeichnet, dass** es eine in der Trägerstruktur (22) angeordnete Düse umfasst, um Inertgas in den Erhitzungsbereich einzuführen.

19. Die Verwendung eines Geräts gemäß einem der vorstehenden Ansprüche 11 - 18, **dadurch gekennzeichnet, dass** es der Schmelz-Extrusionseinheit (56) eines Polymer-Rohrs (28, 55) zur Vernetzung der von der Schmelz-Extrusionseinheit produzierten Polymer-Rohre nachgeschaltet wird.

20. Die Verwendung gemäß Anspruch 19, **dadurch gekennzeichnet, dass** die besagte Schmelz-Extrusionseinheit (56) eines Polymer-Rohrs (28, 55) eine Schmelz-Extrusionseinheit für Polyolefin-Rohre, insbesondere Polyethylen-Rohre ist, wobei die Einheit an eine Polyolefinquelle angeschlossen ist.

## Revendications

1. Procédé pour chauffer un produit polymère allongé, dans lequel un rayonnement infrarouge est dirigé sur le produit polymère (28) en provenance d'au moins deux éléments rayonnants infrarouges (40) situés à l'intérieur d'une zone de chauffage, dans lequel les éléments rayonnants infrarouges (40) sont agencés pour se déplacer autour de l'axe longitudinal du produit polymère (28) le long d'un arc circulaire dans un mouvement parallèle continu pendant le chauffage du produit polymère (28), et dans lequel un potentiel électrique est introduit dans les éléments rayonnants infrarouges (40) via une ou plusieurs bagues collectrices (24) agencées pour être tournées avec les éléments rayonnants infrarouges pendant la rotation des éléments rayonnants infrarouges (40), dans lequel le nombre de bagues collectrices (24) est au moins deux, **caractérisé en ce qu'**elles sont agencées à une certaine distance l'une de l'autre, de sorte qu'un flux de gaz est dirigé entre elles pendant le chauffage pour refroidir les éléments rayonnants infrarouges (40).

2. Procédé selon la revendication 1, **caractérisé en ce que**
- le produit polymère (28) est introduit dans la zone de chauffage dans laquelle il est soumis à un rayonnement infrarouge en provenance d'au moins deux éléments rayonnants infrarouges allongés (40) agencés sur une surface intérieure d'une structure de support (22) de sorte que leurs axes longitudinaux sont agencés au moins sensiblement parallèlement à l'axe central de la structure de support (22),
- le produit polymère (28) est introduit dans la zone de chauffage parallèle à l'axe central de la structure de support (22),
- les éléments rayonnants infrarouges (40) sont amenés à se déplacer autour de l'axe longitudinal du produit polymère de sorte que le produit polymère (28) est soumis à un rayonnement infrarouge de manière aussi égale que possible pendant le chauffage, et
la structure de support (22) des éléments rayonnants infrarouges (40) est tournée autour de son axe central pour chauffer le produit polymère (28).

3. Procédé selon n'importe laquelle des revendications précédentes, **caractérisé en ce que** du gaz inerte est introduit dans la zone de chauffage pendant le chauffage.

4. Procédé selon n'importe laquelle des revendications précédentes, **caractérisé en ce que** le produit polymère (28) est amené à se déplacer à travers la zone de chauffage dans un mouvement continu, linéaire pendant le chauffage.

5. Procédé selon l'une quelconque des revendications précédentes, **caractérisé en ce que** le produit polymère (28) est un tuyau de polyoléfine, particulièrement un tuyau de polyéthène, qui est chauffé pour réticuler la matière de polyoléfine et qui est reçu directement à partir d'une buse d'extrusion d'un outil d'extrudeuse (56).

6. Procédé selon la revendication 5, **caractérisé en ce qu'**un moyen de support (58, 58') est agencé, s'étendant à l'intérieur du tuyau de polymère (28, 55) à partir de l'unité de fusion extrusion jusqu'à la zone de chauffage, agencé pour empêcher l'affaissement du tuyau (28, 55) pendant le chauffage.

7. Procédé selon la revendication 6, **caractérisé en ce que** la surface en coupe transversale du moyen de support (58') augmente dans le sens d'alimentation du tuyau (28, 55) pour parvenir à un étirage biaxial du tuyau (28, 55) pendant le chauffage.

8. Procédé selon n'importe laquelle des revendications précédentes, **caractérisé en ce que** la température du produit polymère (28) est augmentée d'environ 30 à 150 °C, particulièrement d'environ 50 à 100 °C.

9. Procédé selon n'importe laquelle des revendications précédentes, **caractérisés en ce que** environ 10 à 1 000 kJ, particulièrement 100 à 500 kJ d'énergie sont dirigés sur la matière polymère par masse (kg).

10. Procédé selon l'une quelconque des revendications précédentes, **caractérisé en ce que** chaque élément rayonnant infrarouge (40) se déplace d'au moins une révolution, de façon la plus appropriée 2 à 100 révolutions, particulièrement 3 à 50 révolutions autour du produit à chauffer pendant le temps où le produit (28) est dans la zone de chauffage.

11. Appareil pour chauffer un produit polymère (28) avec un rayonnement infrarouge, l'appareil comprenant une zone de chauffage munie d'au moins deux éléments rayonnants infrarouges (40) au moyen desquels le produit polymère (28) introduit dans la zone de chauffage peut être chauffé,
- dans lequel la zone de chauffage comprend une structure de support (22) à laquelle les éléments rayonnants infrarouges sont attachés (40),
- les éléments rayonnants infrarouges (40) sont agencés sur la surface intérieure de la structure de support (22), et
- les éléments rayonnants infrarouges (40) sont supportés en rotation par la structure de support (22), autour de son axe central, au moyen d'un mouvement parallèle continu pendant le chauffage du produit polymère (28) pour chauffer de manière uniforme le produit polymère,
- une ou plusieurs bagues collectrices (24) agencées pour être rotatives avec la structure de support (22) et un moyen pour diriger un potentiel électrique via les bagues collectrices (22) jusqu'aux éléments rayonnants infrarouges (40) pendant la rotation, dans lequel
le nombre de bagues collectrices (24) est au moins deux **caractérisé en ce qu'**elles sont agencées à une certaine distance l'une de l'autre de sorte qu'un flux de gaz peut être dirigé entre elles pendant le fonctionnement du four pour refroidir les éléments rayonnants IR.

12. Appareil selon la revendication 11, **caractérisé en ce que** les éléments rayonnants infrarouges (40) sont espacés de manière uniforme sur la surface intérieure de la structure de support (22), de forme allongée et leur axe est sensiblement parallèle à l'axe central de la structure de support (22).

13. Appareil selon la revendication 11 ou 12, **caractérisé en ce qu'**une surface réfléchissante est agencée entre les éléments rayonnants infrarouges (40) et la surface intérieure de la structure de support (22).

14. Appareil selon l'une quelconque des revendications 11 à 13, **caractérisé en ce que** le nombre d'éléments rayonnants infrarouges (40) est de 2 à 20.

15. Appareil selon l'une quelconque des revendications 11 à 14, **caractérisé en ce que** la structure de support (22) est de forme cylindrique et supportée en rotation par des roues porteuses (32, 34) au moyen de bagues de rotation (15, 17) agencées sur la surface extérieure de la structure de support (22), bagues (15, 17) sur lesquelles les roues porteuses (32, 34) sont supportées.

16. Appareil selon l'une quelconque des revendications 11 à 15, **caractérisé en ce que** la structure de support (22) est agencée pour tourner d'au moins 1, de façon la plus appropriée 2 à 100, particulièrement 3 à 50 révolutions autour du produit (28) à chauffer tandis que le produit (28) est dans la zone de chauffage.

17. Appareil selon l'une quelconque des revendications 11 à 16, **caractérisé en ce que** la zone de chauffage comprend en outre un cylindre 30 fait de matière résistant à la chaleur et perméable au rayonnement, comme du verre de quartz ou du bore vitrifié, à travers lequel le produit polymère (28) à chauffer est transporté et à l'extérieur duquel lesdits éléments rayonnants infrarouges (40) sont agencés.

18. Appareil selon l'une quelconque des revendications précédentes 11 à 17, **caractérisé en ce qu'**il comprend une buse agencée dans la structure de support (22) pour introduire du gaz inerte dans la zone de chauffage.

19. Utilisation d'un appareil selon l'une quelconque des revendications 11 à 18 relié en aval de l'unité de fusion extrusion (56) d'un tuyau de polymère (28, 55) pour réticuler les tuyaux de polymère produits par l'unité de fusion extrusion.

20. Utilisation selon la revendication 19, **caractérisé en ce que** ladite unité de fusion extrusion (56) d'un tuyau de polymère (28, 55) est une unité de fusion extrusion pour des tuyaux de polyoléfine, particulièrement des tuyaux de polyéthène, l'unité étant reliée à une source de la polyoléfine.
